# EUROPÄISCHE PATENTSCHRIFT

(11) **EP 2 478 245 B1**
(45) Veröffentlichungstag und Bekanntmachung des Hinweises auf die Patenterteilung: **16.04.2014**
(21) Anmeldenummer: 10749794.3
(22) Anmeldetag: 27.08.2010
(51) Int. Cl.: F16D 27/01

(54) **KUPPLUNG UND ANTRIEBSSYSTEM**
CLUTCH AND DRIVE SYSTEM
EMBRAYAGE ET SYSTÈME D'ENTRAÎNEMENT

(30) Priorität: 17.09.2009 DE 102009041611
(43) Veröffentlichungstag der Anmeldung: 25.07.2012
(73) Patentinhaber: SEW-EURODRIVE GmbH & Co. KG, 76646 Bruchsal (DE)
(72) Erfinder: BERGER, Ralf, 76297 Stutensee (DE); KNIEJSKI, Adrian, 75203 Königsbach-Stein (DE)
(86) Internationale Anmeldenummer: PCT/EP2010/005268
(87) Internationale Veröffentlichungsnummer: WO 2011/032635

(56) Entgegenhaltungen:
- EP-A1- 1 069 671
- WO-A1-2010/083543
- WO-A1-2010/091799
- WO-A2-2010/056830
- DE-A1- 3 031 647
- DE-A1- 10 244 049
- US-A1- 2009 183 963

## Beschreibung

Die Erfindung betrifft eine Kupplung und ein Antriebssystem.

Bei Zahnkupplungen ist bekannt, ein erstes Kupplungsteil mit einer Verzahnung und ein zweites Kupplungsteil mit einer entsprechenden Verzahnung auszuführen, wobei die Verzahnungen miteinander im Eingriff stehen, insbesondere berührend.

**Aus der** DE 102 44 049 A1 **ist eine Betätigungslageranordnung zur Einleitung einer Betätigungskraft in eine Reibungskupplung unter Drehentkoppelung eines Betätigungssystems von der Reibungskopplung bekannt.**

**Aus der** WO 2010/091799 A1 **ist eine magnetische Kupplung bekannt, deren Dauermagnete auf einem konischen Abschnitt angeordnet sind und deren Magnetisierungsrichtung nach außen vom Konus aus gesehen gerichtet ist. Außerdem sind die beiden Kupplungsteile der Kupplung voneinander beabstandet und greifen nicht ineinander ein.**

**Aus der** EP 1 069 671 A1 **ist ein kontaktloses Magnetgetriebe bekannt.**

**Aus der** WO 2010/083543 A1 **ist eine Taumelgetriebe bekannt.**

Der Erfindung liegt daher die Aufgabe zugrunde, die Standzeit bei Kupplungen zu erhöhen.

Erfindungsgemäß wird die Aufgabe bei der Kupplung nach den in Anspruch 1 **und bei dem Antriebssystem nach Anspruch 11** angegebenen Merkmalen gelöst.

Wichtige Merkmale der Erfindung bei der Kupplung sind, dass sie ein erstes Kupplungsteil und ein zweites Kupplungsteil umfasst,
insbesondere zur Durchleitung von Drehmoment vom ersten auf das zweite Kupplungsteil,
wobei das erste Kupplungsteil erste Dauermagnete aufweist, die in Umfangsrichtung regelmäßig voneinander beabstandet sind,
wobei das zweite Kupplungsteil zweite Dauermagnete aufweist, die in Umfangsrichtung regelmäßig voneinander beabstandet sind,
wobei die Lückenweite zwischen den ersten Dauermagneten kleiner als die Ausdehnung eines jeweiligen ersten Dauermagneten in Umfangsrichtung ist,
wobei die Lückenweite zwischen den zweiten Dauermagneten kleiner als die Ausdehnung eines jeweiligen zweiten Dauermagneten in Umfangsrichtung ist,
wobei zumindest in einem Raumbereich zumindest ein erster Dauermagnet des ersten Kupplungsteils in einer Lücke zwischen zwei benachbarten zweiten Dauermagneten des zweiten Kupplungsteils sich befindet.

Von Vorteil ist dabei, dass bei Durchleitung von Drehmomenten unterhalb eines kritischen Wertes kein Verschleiß der Kupplungsteile und Verzahnungen auftritt, weil das Drehmoment berührungslos übertragen wird mittels der magnetisch gekoppelten ersten und zweiten Dauermagnete. Somit ist der Verschleiß verringert und die Standzeit erhöht.

**Erfindungsgemäß** weisen das erste und zweite Kupplungsteil jeweils eine Verzahnung auf, wobei die Zähne der Verzahnung des ersten Kupplungsteils in Zahnlücken der Verzahnung des zweiten Kupplungsteils hineinragen und umgekehrt. Von Vorteil ist dabei, dass bei Ausfall der magnetischen Kupplung mittels der Verzahnungen Drehmoment übertragbar ist. Somit ist die Sicherheit erhöht und die Dauermagnete sind vor mechanischer Zerstörung geschützt.

Bei einer vorteilhaften Ausgestaltung ist die jeweilige Zahnlückenweite größer als die jeweilige Zahnbreite, wobei die zugehörige Beabstandung derart gewählt ist, dass ab einem kritischen Wert von zu übertragendem Drehmoment die Verzahnungen einander berühren. Von Vorteil ist dabei, dass das Spiel der im Eingriff stehenden Verzahnungen eine relative Drehbewegung ermöglicht, innerhalb derer das über die magnetische Kupplung übertragene Drehmoment exponentiell ansteigt und somit hohe Drehmomente übertragbar sind.

Bei einer vorteilhaften Ausgestaltung sind die ersten Dauermagneten In Umfangsrichtung und die zweiten Dauermagneten entgegengesetzt zur Umfangsrichtung magnetisiert. Von Vorteil ist dabei, dass einen magnetische Kupplung realisierbar ist, bei der die Dauermagnete ohne Berührung zueinander Drehmoment übertragen, da die ersten und zweiten Dauermagnete einander abstoßen.

Bei einer vorteilhaften Ausgestaltung ist die Verzahnung des ersten Kupplungsteils auf kleinerem Radialabstand zur Achse des ersten Kupplungsteils angeordnet als die ersten Dauermagnete. Von Vorteil ist dabei, dass die magnetische Kupplung ein möglichst großes Drehmoment übertragbar macht, indem sie auf einem großen Radialabstand angeordnet ist. Für den Sicherheitsfall übernimmt dann die Zahnkupplung die Drehmomentübertragung, wobei ein kleiner Radialabstand genügt, da die Tragfähigkeit der Zähne größer ist als die Drehmomentübertragfähigkeit der Dauermagnete.

Ebenso ist die Verzahnung des zweiten Kupplungsteils auf kleinerem Radialabstand zur Achse des zweiten Kupplungsteils angeordnet als die ersten Dauermagnete.

Bei einer vorteilhaften Ausgestaltung sind die Kupplungsteile kegelförmig ausgebildet sind, insbesondere im Wesentlichen wie eine Kegelrad-Getriebestufe. Von Vorteil ist dabei, dass auch nicht koaxial übertragbar ist, also an eine einen Winkel zur eintreibenden Welle aufweisende abtreibende Kupplungswelle.

Bei einer vorteilhaften Ausgestaltung sind die Dauermagnete länglich ausgebildet und im Wesentlichen in radialer Richtung angeordnet sind, wobei die Magnetisierungsrichtung senkrecht zur Längsrichtung ausgeführt ist. Von Vorteil ist dabei, dass hohe Kräfte pro Axialbereich übertragbar sind.

Bei einer vorteilhaften Ausgestaltung sind die Dauermagnete länglich ausgebildet und mit einem Schrägungswinkel gegen die radiale Richtung angeordnet, wobei die Magnetisierungsrichtung in Umfangsrichtung ausgeführt ist. Von Vorteil ist dabei, dass die Drehmoment-Winkelauslenkungs-Kennline weicher ausführbar ist, da bei Auslenkungen die Abstände in Umfangsrichtung als Funktion des Radialabstandes anders verläuft als bei einer Kupplung ohne Schrägungswinkel.

Bei einer vorteilhaften Ausgestaltung sind die Zahnlücken zumindest teilweise mit einem im Vergleich zu dem Material der Zähne elastischeren Material, wie beispielsweise Kunststoff, gefüllt. Von Vorteil ist dabei, dass schon vor Eintreten des Sicherheitsfalls ein Anteil an Drehmoment über die Zahnkupplung übertragbar ist und bei hohen Drehmomenten dieser Anteil sich entsprechend erhöht ohne sprunghafte Zunahme.

Bei einer vorteilhaften Ausgestaltung sind die Dauermagnete durch Elektromagnete ersetzt. Von Vorteil ist dabei, dass die magnetische Kupplung steuerbar ist, insbesondere sind kurzfristig auch Stromspitzen vorsehbar, so dass kurzfristig hohe Drehmomente übertragbar sind. Außerdem ist mittels der Bestromung eine Bedämpfung von Drehschwingungen und dergleichen ausführbar.

Bei einer vorteilhaften Ausgestaltung sind die Verzahnungen aus einem Metall, wie Stahl oder Aluminium, gefertigt. Von Vorteil ist dabei, dass ein tragfähiges kostengünstiges Material verwendbar ist.

Wichtige Merkmale bei dem Antriebssystem sind, dass es eine vorbeschriebene Kupplung umfasst und ein Schienenteil,
wobei die Kupplung relativ zum Schienenteil bewegbar angeordnet ist, insbesondere an dem Schienenteil geführt,
wobei zumindest ein Kupplungsteil weitere Dauermagnete aufweist, die in Umfangsrichtung voneinander beabstandet sind, insbesondere regelmäßig voneinander beabstandet sind,
und an einer Reaktionsfläche des Schienenteils derart vorbeidrehbar sind, dass eine Vortriebskraft nach dem Wirbelstromprinzip erzeugbar ist.

Von Vorteil ist dabei, dass ein berührungsloses Antreiben eines schienengeführten Wagens ermöglicht ist, wobei die Schienen eine Reaktionsfläche zur Verfügung stellen muss, um gemäß Wirbelstromprinzip eine Vortriebskraft zu erzeugen, wenn die auf den Kupplungsteilen vorgesehenen weiteren Dauermagnete an der Reaktionsfläche vorbeidrehen.

**Erfindungsgemäß** ist die Kupplung entlang der Schiene bewegbaren Wagen angeordnet. Von Vorteil ist dabei, dass die Schiene als Führung und als Reaktionsfläche verwendbar ist.

**Erfindungsgemäß** sind die weiteren Dauermagnete eines Kupplungsteils auf einem größeren Radialabstand angeordnet als Verzahnung sowie als die ersten beziehungsweise zweiten Dauermagnete des Kupplungsteils. Von Vorteil ist dabei, dass eine starke Vortriebskrafterzeugung ausführbar ist, da die Rotationsgeschwindigkeit auf diesem großen Radius entsprechend groß ist und somit starke Wirbelströme erzeugbar sind.

Bei einer vorteilhaften Ausgestaltung ist ein erstes Kupplungsteil von einem Motor, insbesondere Elektromotor, antreibbar angeordnet und es wird dem zweiten Kupplungsteil vom ersten Kupplungsteil Drehmoment zugeleitet mittels der magnetisch gekoppelten ersten und zweiten Dauermagnete und/oder mittels der Verzahnungen. Von Vorteil ist dabei, dass nur ein antreibender Motor notwendig ist, wobei das Drehmoment über die Kupplung dem zweiten Kupplungsteil zugeleitet wird, das wiederum zur Erzeugung von Vortriebskraft eingesetzt wird.

Bei einer vorteilhaften Ausgestaltung ist an den Kupplungsteilen und/oder an einer mit dem jeweiligen Kupplungsteil verbundenen Welle ein Lager vorgesehen, über das ein auf einer Lauffläche des Schienenteils abrollbares Rad gelagert ist. Von Vorteil ist dabei, dass eine Führung des Wagens mit dem Antrieb ermöglicht ist und für die Räder keine zusätzliche Achse notwendig ist sonder die Lager der Räder um die antreibende Welle herum anordenbar sind. Je näher die Istdrehzahl der Räder an die Solldrehzahl herangeführt ist, desto geringer wird die Relativdrehzahl zwischen Rad und Kupplungsteil, die am Lager auftritt.

Bei einer vorteilhaften Ausgestaltung sind die Kupplungsteile zumindest teilweise kegelförmig ausgeführt, wobei die Dauermagnete und die Verzahnungen auf dem entsprechenden Kegelmantelabschnitt angeordnet sind. Von Vorteil ist dabei, dass eine winklige Anordnung derart ermöglicht ist, dass eine Selbststabilisierung des Wagens ausführbar ist.

Bei einer vorteilhaften Ausgestaltung weisen die Laufflächen der Räder einen Winkel zueinander auf, der dem Kegelöffnungswinkel der Kupplungsteile entspricht, insbesondere wobei die Kegelöffnungswinkel der beiden Kupplungsteile gleich sind. Von Vorteil ist dabei, dass die Räder und deren Laufflächen entsprechend dem Kegelöffnungswinkel geneigt sind.

Bei einer vorteilhaften Ausgestaltung sind die Laufflächen derart konkav ausgeführt, dass eine Selbststabilisierung des Wagens erreicht ist. Von Vorteil ist dabei, dass durch die winklige Anordnung der Laufflächen und deren konkave Ausführung eine sehr gute Selbststabilisierung erreichbar ist.

Weitere Vorteile ergeben sich aus den Unteransprüchen.

Die Erfindung wird nun anhand von Abbildungen näher erläutert:
In der Figur 1 ist eine erfindungsgemäße Magnetkupplung in ebener Form und in angeschnittener Ansicht gezeigt.
In der Figur 2 ist eine erfindungsgemäße Magnetkupplung in Kegelform und in Schrägansicht gezeigt.

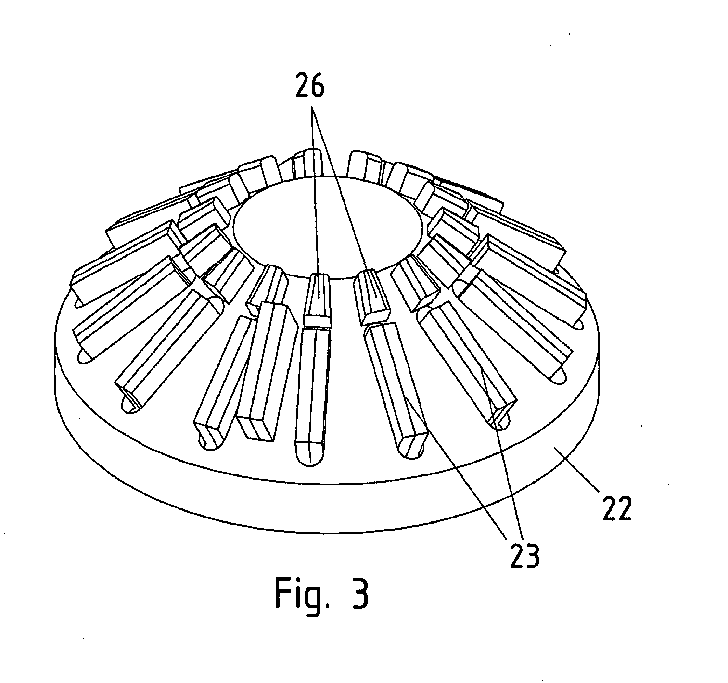

In Figur 3 ist eines der Kupplungsteile der Magnetkupplung nach Figur 2 gezeigt.
In Figur 4 ist ein Polradantrieb mit integrierter Magnetkupplung in Kegelform gezeigt.

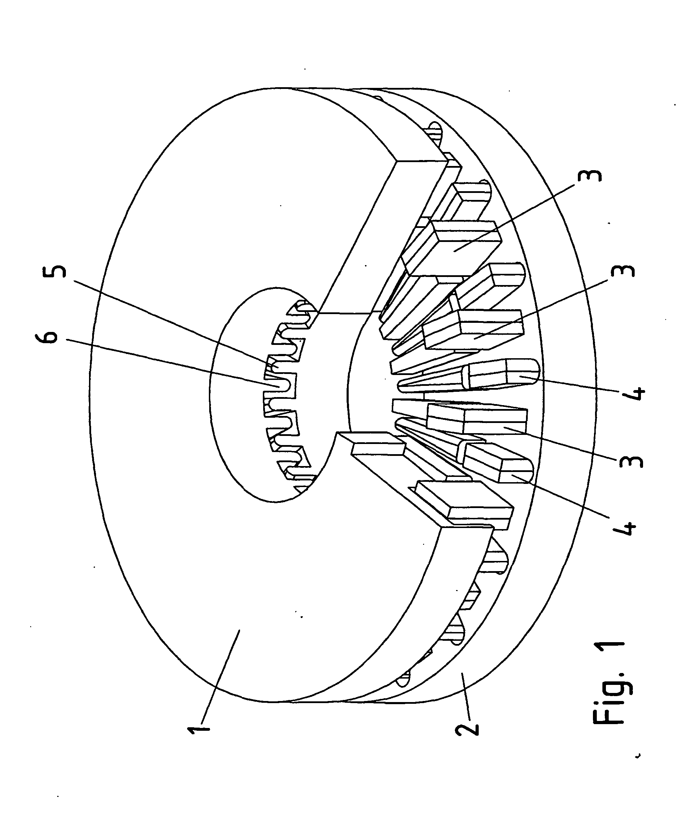

Im Ausführungsbeispiel nach Figur 1 ist ein erstes Kupplungsteil 1 gezeigt, das mit einer eintreibenden Welle verbindbar ist und gekoppelt ist mit einem zweiten Kupplungsteil 2, das mit einer abtreibenden Welle verbindbar ist.

In einem ersten Radialabstandsbereich tragen die Kupplungsteile 1 und 2 eine jeweilige Verzahnung 5 und 6, welche bei Versagen der magnetischen Kupplung miteinander in Eingriff stehen. Hierzu ist die Lückenweite der Verzahnung 5 deutlich größer als die Zahnweite des jeweiligen in die Lücke hineinragenden Zahns der Verzahnung 6.

Im zweiten Radialabstandsbereich, der größere Radialabstände aufweist als der erste Radialabstand, ist eine magnetische Kupplung angeordnet. Hierzu sind auf dem ersten Kupplungsteil in Umfangsrichtung regelmäßig voneinander beabstandet Dauermagnete 3 am Kupplungsteil angeklebt, die in Umfangsrichtung magnetisiert sind. Auch am zweiten Kupplungsteil sind in Umfangsrichtung regelmäßig voneinander beabstandet Dauermagnete 4 am Kupplungsteil angeklebt, die aber entgegen der Umfangsrichtung magnetisiert sind.

Erstes und zweites Kupplungsteil (2, 1) sind derart axial nahe angeordnet, dass ein jeweiliger erster Dauermagnet 3 in den Zwischenbereich zwischen jeweilige zweite Dauermagnete 4 hineinragt. Der axiale Bereich der ersten Dauermagnete überlappt also mit dem axialen Bereich der zweiten Dauermagnete oder diese Bereiche gleichen einander. Ebenso überlappt der Radialabstandsbereich der ersten Dauermagnete also mit dem Radialabstandsbereich der zweiten Dauermagnete oder diese Bereiche gleichen einander. In Umfangsrichtung sind erste und zweite Dauermagnete abwechselnd hintereinander angeordnet.

Die in Umfangsrichtung jeweils entgegengerichtete Magnetisierung bewirkt eine Abstoßung der jeweils sich in Umfangsrichtung benachbart gegenüber stehenden Magnete (3, 4).

Auf diese Weise ist eine Magnetkupplung geschaffen, deren Kupplungsteile (1, 2) in Umfangsrichtung voneinander beabstandet sind. Bei Überlastung, also Durchleiten eines zu hohen Drehmoments durch die Kupplung wird in Umfangsrichtung die Beabstandung derart kleiner, dass die Verzahnungen (5, 6) sich berühren und somit eine formschlüssige Übertragung von Drehmoment zusätzlich eingeleitet wird.

Bei Ausfall oder Überlastung einer Drehmomentübertragungseinrichtung, also entweder der magnetischen Kupplung oder der die Verzahnungen umfassenden Zahnkupplung, wird die jeweils andere zur Drehmomentübertragung beaufschlagt. Somit ist die Sicherheit erhöht.

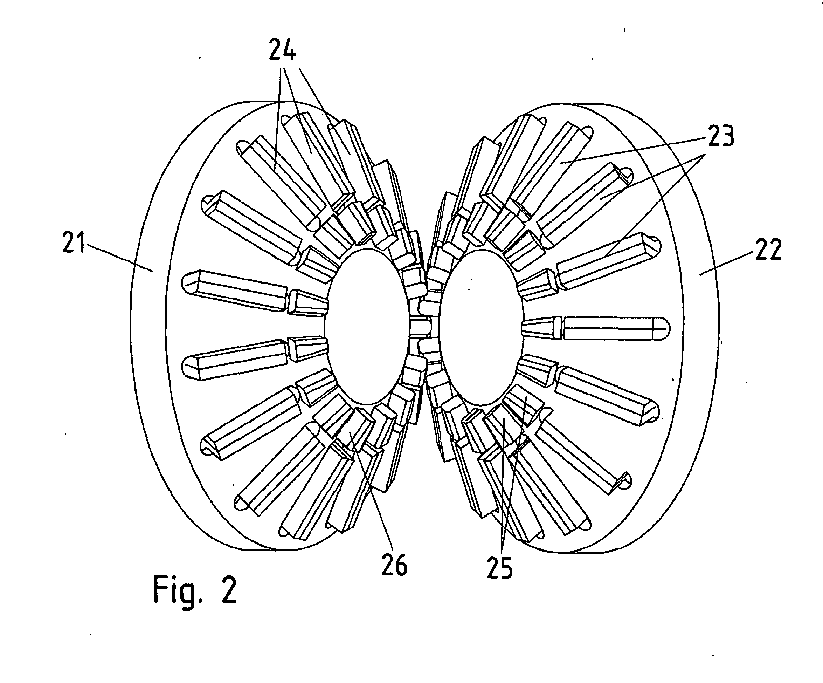

In Figur 2 ist eine ähnliche Kupplung gezeigt, die allerdings in Kegelform ausgeführt ist. Dabei ist sind erstes Kupplungsteil 21 und zweites Kupplungsteil 22 kegelig ausgeführt und die ersten Dauermagnete 23 sowie die zweiten Dauermagnete 24 sind auf dem Kegelmantel wiederum in Umfangsrichtung vorgesehen. Ebenso sind die Verzahnung 25 des zweiten Kupplungsteils und die Verzahnung 26 des ersten Kupplungsteils auf dem Kegelmantel vorgesehen.

Somit ist die Kupplung in der Lage, Drehmoment von einer eintreibenden Welle zu einer abtreibenden Welle zu übertragen, die nicht parallel zueinander sind. Dabei ist die eintreibenden Welle mit dem ersten Kupplungsteil und die abtreibende Welle mit dem zweiten Kupplungsteil verbunden.

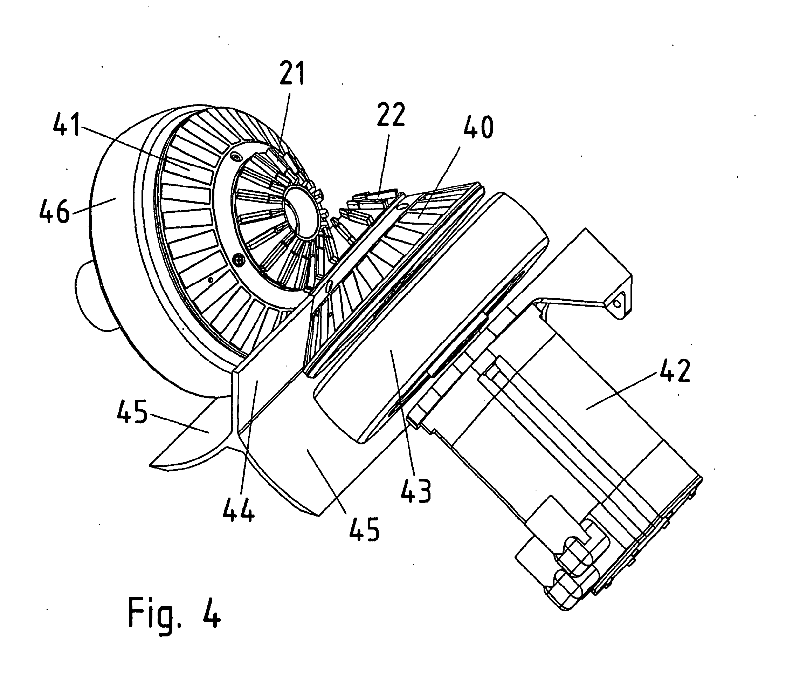

In Figur 4 ist ein zugehöriges Antriebssystem gezeigt. Hierbei wird bei einem Wirbelstromantrieb ein kegelförmiges erstes Polrad 40 angetrieben, auf dessen Kegelmantel an seinem Umfang Dauermagnete befestigt sind, die von einem Elektromotor 42 drehbar sind. Denn das Polrad 40 ist mit der Rotorwelle des Elektromotors 42 verbunden.

Die Dauermagnete werden an einer metallischen Reaktionsfläche, insbesondere aus Aluminium oder Stahl, eines Schienenteils vorbeigedreht, so dass infolge des erzeugten Wirbelstroms eine Vortriebskraft erzeugbar ist, die zum Antreiben eines Fahrzeugs verwendet wird, an dem die zugehörigen Teile des Antriebssystems befestigt sind. Mit der Rotorwelle des Motors ist auch ein Rad 43 verbunden, das auf einer am Schienenteil ausgebildeten Lauffläche abrollbar ist.

Mittels der Kupplung wird Drehmoment an ein zweites Polrad übertragen, dessen Welle nicht parallel zur Rotorwelle ist.
Dabei sind die zum Antreiben vorgesehenen Dauermagnete der Polräder auf einem jeweils größeren Radialabstand vorgesehen als die Kupplung, bei der wiederum die Dauermagnete der magnetischen Kopplung auf einem größeren Radialabstand angeordnet sind als die Verzahnungen der Kupplung.

Die Polräder erzeugen somit mit ihren Dauermagneten (40, 41) in sehr synchroner Weise ohne wesentlichen Phasendifferenzen am Reaktionsteil eine Vortriebskraft in Schienenrichtung. Die mit dem jeweiligen Porad verbundenen Räder 43 ermöglichen ein Abrollen an der Schiene. Die Schienen sind konkav ausgeführt, so dass eine Selbststabilisierung des Fahrzeuges ermöglicht ist.

Vorzugsweise sind Laufflächen und Reaktionsteil einstückig ausgeführt.

Die Räder sind an der Welle mittels eines Lagers gelagert, so dass die Drehzahl der Räder (43, 46) verschieden sein kann von der Drehzahl der Polräder.

Somit ist ein Wirbelstromantrieb beschrieben, der zwei synchron betriebene Polräder aufweist, die mittels der Kupplung synchronisiert sind. Im Wesentlichen wird eine Hälfte des vom Motor erzeugten Drehmoments dem ersten Polrad und die zweite Hälfte des Drehmoments über die Kupplung dem zweiten Polrad, wobei bei Überlastung der magnetischen Kupplung die Verzahnungskupplung einsetzt und somit die Magnete vor Berührung schützt.

Die Magnete der Kupplung sind vorzugsweise alle gleich stark magnetisiert. Auf diese Weise wird eine mittige Positionierung der beiden Kupplungshälften zueinander erreicht. Somit sind die Magnete des ersten Kupplungsteils jeweils in der Mitte zwischen zwei Magneten der anderen Kupplungsteils positioniert. Je nach Stärke des durchzuleitenden Drehmoments ergeben sich hierzu Auslenkungen, wobei die magnetische Abstoßung exponentiell zunimmt mit der Auslenkung.

Bei einem weiteren erfindungsgemäßen Ausführungsbeispiel werden die Zähne der Verzahnung von einem Kunststoff umgeben, so dass bei Überlast ein hartes Aufeinanderschlagen der Zähne vermieden ist.

### Bezugszeichenliste

- 1: Erstes Kupplungsteil
- 2: Zweites Kupplungsteil
- 3: Erste Dauermagnete
- 4: Zweite Dauermagnete
- 5: Verzahnung des zweiten Kupplungsteils
- 6: Verzahnung des ersten Kupplungsteils

- 21: Erstes Kupplungsteil
- 22: Zweites Kupplungsteil
- 23: Erste Dauermagnete
- 24: Zweite Dauermagnete
- 25: Verzahnung des zweiten Kupplungsteils
- 26: Verzahnung des ersten Kupplungsteils

- 40: erstes Polrad
- 41: Zweites Polrad
- 42: Elektromotor
- 43: Rad
- 44: Reaktionsteil
- 45: Laufflächen für jeweiliges Rad
- 46: Rad

## Patentansprüche

1. Kupplung, umfassend ein erstes Kupplungsteil (1, 21) und ein zweites Kupplungsteil (2, 22),
insbesondere zur Durchleitung von Drehmoment vom ersten auf das zweite Kupplungsteil (2, 22),
**wobei** das erste Kupplungsteil (1, 21) erste Dauermagnete (3, 23) aufweist, die in Umfangsrichtung regelmäßig voneinander beabstandet sind,
wobei das zweite Kupplungsteil (2, 22) zweite Dauermagnete aufweist, die in Umfangsrichtung regelmäßig voneinander beabstandet sind,
wobei die Lückenweite zwischen den ersten Dauermagneten (3, 23) größer als die Ausdehnung eines jeweiligen zweiten Dauermagneten (4, 24) in Umfangsrichtung ist,
wobei die Lückenweite zwischen den zweiten Dauermagneten (4, 24) **größ**er als die Ausdehnung eines jeweiligen **ers**ten Dauermagneten **(3, 23)** in Umfangsrichtung ist,
wobei zumindest in einem Raumbereich zumindest ein erster Dauermagnet des ersten Kupplungsteils (1, 21) in einer Lücke zwischen zwei benachbarten zweiten Dauermagneten (4, 24) des zweiten Kupplungsteils (2, 22) sich befindet,
**wobei das erste und zweite Kupplungsteil (2, 22) jeweils eine Verzahnung (5,6,25,26) aufweisen, wobei die Zähne der Verzahnung (5,25) des ersten Kupplungsteils (1, 21) in Zahnlücken der Verzahnung (6, 26) des zweiten Kupplungsteils (2, 22) hineinragen und umgekehrt,**
**wobei die ersten Dauermagneten (3, 23) In Umfangsrichtung und die zweiten Dauermagneten (4, 24) entgegengesetzt zur Umfangsrichtung magnetisiert sind,**
**wobei die Verzahnung (5,25) des ersten Kupplungsteils (1, 21) auf kleinerem Radialabstand zur Achse des ersten Kupplungsteils (1, 21) angeordnet sind als die ersten Dauermagnete (3, 23).**

2. Kupplung nach Anspruch 1,
**dadurch gekennzeichnet, dass**
die jeweilige Zahnlückenweite größer ist als die jeweilige Zahnbreite, wobei die zugehörige Beabstandung derart gewählt ist, dass ab einem kritischen Wert von zu übertragendem Drehmoment die Verzahnungen (5, 6, 25, 26) einander berühren.

3. Kupplung nach mindestens einem der vorangegangenen Ansprüche,
**dadurch gekennzeichnet, dass**
die Verzahnung (6, 26) des zweiten Kupplungsteils (2, 22) auf kleinerem Radialabstand zur Achse des zweiten Kupplungsteils (2, 22) angeordnet sind als die ersten Dauermagnete (3, 23).

4. Kupplung nach mindestens einem der vorangegangenen Ansprüche,
**dadurch gekennzeichnet, dass**
die Kupplungsteile kegelförmig ausgebildet sind, insbesondere im Wesentlichen wie eine Kegelrad-Getriebestufe.

5. Kupplung nach mindestens einem der vorangegangenen Ansprüche,
**dadurch gekennzeichnet, dass**
die Dauermagnete (3, 23) länglich ausgebildet sind und im Wesentlichen in radialer Richtung angeordnet sind, wobei die Magnetisierungsrichtung senkrecht zur Längsrichtung ausgeführt ist.

6. Kupplung nach einem der Ansprüche 1 bis 6,
**dadurch gekennzeichnet, dass**
die Dauermagnete (3, 23) länglich ausgebildet sind und mit einem Schrägungswinkel gegen die radiale Richtung angeordnet sind, wobei die Magnetisierungsrichtung in Umfangsrichtung ausgeführt ist.

7. Kupplung nach mindestens einem der vorangegangenen Ansprüche,
**dadurch gekennzeichnet, dass**
die Zahnlücken zumindest teilweise mit einem im Vergleich zu dem Material der Zähne elastischeren Material, wie beispielsweise Kunststoff, gefüllt sind.

8. Kupplung nach mindestens einem der vorangegangenen Ansprüche,
**dadurch gekennzeichnet, dass**
die Dauermagnete (3, 23) durch Elektromagnete ersetzt sind.

9. Kupplung nach mindestens einem der vorangegangenen Ansprüche,
**dadurch gekennzeichnet, dass**
die Verzahnungen (5, 6, 25, 26) aus einem Metall, wie Stahl oder Aluminium, gefertigt sind.

10. Antriebssystem, umfassend eine Kupplung nach mindestens einem der vorangegangenen Ansprüche und ein Schienenteil,
wobei die Kupplung relativ zum Schienenteil bewegbar angeordnet ist, insbesondere an dem Schienenteil geführt,
**dadurch gekennzeichnet, dass**
zumindest ein Kupplungsteil weitere Dauermagnete aufweist, die in Umfangsrichtung voneinander beabstandet sind, insbesondere regelmäßig voneinander beabstandet sind,
und an einer Reaktionsfläche des Schienenteils derart vorbeidrehbar sind, dass eine Vortriebskraft nach dem Wirbelstromprinzip erzeugbar ist,
- **wobei die Kupplung an einem entlang der Schiene bewegbaren Wagen angeordnet ist**
- **und/oder wobei die weiteren Dauermagnete eines Kupplungsteils auf einem größeren Radialabstand angeordnet sind als die Verzahnung sowie als die ersten beziehungsweise zweiten Dauermagnete des Kupplungsteils.**

11. Antriebssystem nach mindestens einem der vorangegangenen Ansprüche,
**dadurch gekennzeichnet, dass**
ein erstes Kupplungsteil (1, 21) von einem Motor, insbesondere Elektromotor (42), antreibbar angeordnet ist und dem zweiten Kupplungsteil (2, 22) vom ersten Kupplungsteil (1, 21) Drehmoment zugeleitet bekommt mittels der magnetisch gekoppelten ersten und zweiten Dauermagnete und/oder mittels der Verzahnungen (5, 6, 25, 26).

12. Antriebssystem nach mindestens einem der vorangegangenen Ansprüche,
**dadurch gekennzeichnet, dass**
an den Kupplungsteilen und/oder an einer mit dem jeweiligen Kupplungsteil verbundenen Welle ein Lager vorgesehen ist, über das ein auf einer Lauffläche des Schienenteils abrollbares Rad gelagert ist.

13. Antriebssystem nach mindestens einem der vorangegangenen Ansprüche,
**dadurch gekennzeichnet, dass**
die Kupplungsteile zumindest teilweise kegelförmig ausgeführt sind, wobei die Dauermagnete und die Verzahnungen (5, 6, 25, 26) auf dem entsprechenden Kegelmantelabschnitt angeordnet sind.

14. Antriebssystem nach mindestens einem der vorangegangenen Ansprüche,
**dadurch gekennzeichnet, dass**
die Laufflächen der Räder einen Winkel zueinander aufweisen, der dem Kegelöffnungswinkel der Kupplungsteile entspricht, insbesondere wobei die Kegelöffnungswinkel der beiden Kupplungsteile gleich sind,
und/oder dass
die Laufflächen derart konkav ausgeführt sind, dass eine Selbststabilisierung des Wagens erreicht ist.

## Claims

1. A clutch, comprising a first clutch part (1, 21) and a second clutch part (2, 22),
in particular for transmitting torque from the first to the second clutch part (2, 22),
wherein the first clutch part (1, 21) has first permanent magnets (3, 23) which are spaced regularly apart from each other in the peripheral direction,
wherein the second clutch part (2, 22) has second permanent magnets which are spaced regularly apart from each other in the peripheral direction,
wherein the gap width between the first permanent magnets (3, 23) is greater than the extent of a respective second permanent magnet (4, 24) in the peripheral direction,
wherein the gap width between the second permanent magnets (4, 24) is greater than the extent of a respective first permanent magnet (3, 23) in the peripheral direction,
wherein at least in one spatial region at least one first permanent magnet of the first coupling part (1, 21) is located in a gap between two adjacent second permanent magnets (4, 24) of the second coupling part (2, 22),
wherein the first and second clutch parts (2, 22) in each case have a set of teeth (5, 6, 25, 26), the teeth of the set of teeth (5, 25) of the first coupling part (1, 21) protruding into tooth spaces of the set of teeth (6, 26) of the second coupling part (2, 22), and vice versa,
wherein the first permanent magnets (3, 23) are magnetised in the peripheral direction and the second permanent magnets (4, 24) are magnetised in the opposite direction to the peripheral direction,
wherein the set of teeth (5, 25) of the first coupling part (1, 21) are arranged at a shorter radial distance from the axis of the first coupling part (1, 21) than the first permanent magnets (3, 23).

2. A clutch according to Claim 1, **characterised in that** the respective tooth-space width is greater than the respective tooth width, the associated spacing being selected such that, from a critical value of torque which is to be transmitted onwards, the sets of teeth (5, 6, 25, 26) touch one another.

3. A clutch according to at least one of the preceding claims, **characterised in that** the set of teeth (6, 26) of the second coupling part (2, 22) are arranged at a shorter radial distance from the axis of the second coupling part (2, 22) than the first permanent magnets (3, 23).

4. A clutch according to at least one of the preceding claims, **characterised in that** the coupling parts are formed conically, in particular substantially like a bevel-gear stage.

5. A clutch according to at least one of the preceding claims, **characterised in that** the permanent magnets (3, 23) are formed elongate and are arranged substantially in the radial direction, the direction of magnetisation being formed perpendicularly to the longitudinal direction.

6. A clutch according to one of Claims 1 to 5, **characterised in that** the permanent magnets (3, 23) are formed elongate and are arranged with a helix angle counter to the radial direction, the direction of magnetisation being formed in the peripheral direction.

7. A clutch according to at least one of the preceding claims, **characterised in that** the tooth spaces are filled at least partially with a material which is more elastic compared with the material of the teeth, such as for example plastics material.

8. A clutch according to at least one of the preceding claims, **characterised in that** the permanent magnets (3, 23) are replaced by electromagnets.

9. A clutch according to at least one of the preceding claims, **characterised in that** the sets of teeth (5, 6, 25, 26) are manufactured from a metal, such as steel or aluminium.

10. A drive system, comprising a clutch according to at least one of the preceding claims and a rail part,
wherein the clutch is arranged to be movable relative to the rail part, in particular is guided on the rail part,
**characterised in that**
at least one clutch part has further permanent magnets which are spaced apart from each other in the peripheral direction, in particular are spaced apart regularly from each other,
and can be rotated past a reaction surface of the rail part in such a manner that a propulsive force can be generated according to the eddy-current principle,
- the clutch being arranged on a car which is movable along the rail
- and/or the further permanent magnets of a coupling part being arranged at a greater radial distance than the set of teeth and than the first or second permanent magnets of the coupling part.

11. A drive system according to at least one of the preceding claims, **characterised in that** a first clutch part (1, 21) is arranged to be able to be driven by a motor, in particular an electric motor (42), and the second clutch part (2, 22) has torque supplied to it from the first clutch part (1, 21) by means of the magnetically coupled first and second permanent magnets and/or by means of the sets of teeth (5, 6, 25, 26).

12. A drive system according to at least one of the preceding claims, **characterised in that** a bearing is provided on the coupling parts and/or on a shaft connected to the respective clutch part, via which bearing a wheel which can be rolled on a running surface of the rail part is mounted.

13. A drive system according to at least one of the preceding claims, **characterised in that** the coupling parts are formed to be at least partially conical, the permanent magnets and the sets of teeth (5, 6, 25, 26) being arranged on the corresponding cone envelope section.

14. A drive system according to at least one of the preceding claims, **characterised in that** the running surfaces of the wheels have an angle relative to each other which corresponds to the cone opening angle of the coupling parts, in particular the cone opening angles of the two coupling parts being identical,
and/or **in that**
the running surfaces are embodied concavely such that automatic stabilisation of the car is achieved.

## Revendications

1. Embrayage, comprenant une première partie d'embrayage (1, 21) et une deuxième partie d'embrayage (2, 22),
en particulier pour faire passer un couple de la première à la deuxième partie d'embrayage (2, 22),
sachant que la première partie d'embrayage (1, 21) présente des premiers aimants permanents (3, 23) qui sont régulièrement espacés les uns des autres en direction périphérique,
sachant que la deuxième partie d'embrayage (2, 22) présente des deuxièmes aimants permanents qui sont régulièrement espacés les uns des autres en direction périphérique, sachant que la largeur d'intervalle entre les premiers aimants permanents (3, 23) est plus grande que l'étendue d'un deuxième aimant permanent respectif (4, 24) en direction périphérique,
sachant que la largeur d'intervalle entre les deuxièmes aimants permanents (4, 24) est plus grande que l'étendue d'un premier aimant permanent respectif (3, 23) en direction périphérique,
sachant que, au moins dans une région spatiale, au moins un premier aimant permanent de la première partie d'embrayage (1, 21) se trouve dans un intervalle entre deux deuxièmes aimants permanents voisins (4, 24) de la deuxième partie d'embrayage (2, 22),
sachant que la première et la deuxième partie d'embrayage (2, 22) présentent respectivement une denture (5, 6, 25, 26), sachant que les dents de la denture (5, 25) de la première partie d'embrayage (1, 21) pénètrent dans des entredents de la denture (6, 26) de la deuxième partie d'embrayage (2, 22), et vice versa,
sachant que les premiers aimants permanents (3, 23) sont magnétisés en direction périphérique et les deuxièmes aimants permanents (4, 24) en direction opposée à la direction périphérique,
sachant que la denture (5, 25) de la première partie d'embrayage (1, 21) est disposée à une plus petite distance radiale de l'axe de la première partie d'embrayage (1, 21) que les premiers aimants permanents (3, 23).

2. Embrayage selon la revendication 1, **caractérisé en ce que** la largeur respective des entredents est supérieure à la largeur respective des dents, sachant que l'espacement correspondant est choisi de telle sorte que les dentures (5, 6, 25, 26) entrent en contact mutuel à partir d'une valeur critique de couple à transmettre.

3. Embrayage selon au moins une des revendications précédentes, **caractérisé en ce que** la denture (6, 26) de la deuxième partie d'embrayage (2, 22) est disposée à une plus petite distance radiale de l'axe de la deuxième partie d'embrayage (2, 22) que les premiers aimants permanents (3, 23).

4. Embrayage selon au moins une des revendications précédentes, **caractérisé en ce que** les parties d'embrayage sont réalisées coniques, en particulier sensiblement comme un étage de transmission à roues coniques.

5. Embrayage selon au moins une des revendications précédentes, **caractérisé en ce que** les aimants permanents (3, 23) sont réalisés oblongs et sont disposés essentiellement en direction radiale, sachant que la direction de magnétisation est réalisée perpendiculaire à la direction longitudinale.

6. Embrayage selon l'une des revendications 1 à 5, **caractérisé en ce que** les aimants permanents (3, 23) sont réalisés oblongs et sont disposés avec un angle d'inclinaison par rapport à la direction radiale, sachant que la direction de magnétisation est réalisée en direction périphérique.

7. Embrayage selon au moins une des revendications précédentes, **caractérisé en ce que** les entredents sont remplis au moins partiellement d'un matériau plus élastique que le matériau des dents, comme par exemple une matière plastique.

8. Embrayage selon au moins une des revendications précédentes, **caractérisé en ce que** les aimants permanents (3, 23) sont remplacés par des électroaimants.

9. Embrayage selon au moins une des revendications précédentes, **caractérisé en ce que** les dentures (5, 6, 25, 26) sont fabriquées en métal, par exemple en acier ou en aluminium.

10. Système d'entraînement, comprenant un embrayage selon au moins une des revendications précédentes et un tronçon de rail,
sachant que l'embrayage est disposé à déplacement par rapport au tronçon de rail, notamment est guidé sur le tronçon de rail,
**caractérisé en ce qu'**au moins une partie d'embrayage présente des aimants permanents supplémentaires qui sont espacés les uns des autres en direction périphérique, en particulier qui sont régulièrement espacés les uns des autres,
et qui peuvent passer en tournant devant une surface de réaction du tronçon de rail de telle sorte qu'une force d'avancement peut être produite selon le principe du courant de Foucault,
- sachant que l'embrayage est disposé sur un chariot mobile le long du rail,
- et/ou sachant que les aimants permanents supplémentaires d'une partie d'embrayage sont disposés à une plus grande distance radiale que la denture ainsi que les premiers ou respectivement deuxièmes aimants permanents de la partie d'embrayage.

11. Système d'entraînement selon au moins une des revendications précédentes, **caractérisé en ce qu'**une première partie d'embrayage (1, 21) est disposée en pouvant être entraînée par un moteur, notamment un moteur électrique (42), et un couple est apporté à la deuxième partie d'embrayage (2, 22) par la première partie d'embrayage (1, 21) au moyen des premiers et deuxièmes aimants permanents magnétiquement couplés et/ou au moyen des dentures (5, 6, 25, 26).

12. Système d'entraînement selon au moins une des revendications précédentes, **caractérisé en ce qu'**un palier, servant au montage d'une roue pouvant rouler sur une surface de roulement du tronçon de rail, est prévu sur les parties d'embrayage et/ou sur un arbre relié à la partie d'embrayage respective.

13. Système d'entraînement selon au moins une des revendications précédentes, **caractérisé en ce que** les parties d'embrayage sont réalisées au moins partiellement coniques, sachant que les aimants permanents et les dentures (5, 6, 25, 26) sont disposés sur le tronçon d'aire latérale de cône correspondant.

14. Système d'entraînement selon au moins une des revendications précédentes, **caractérisé en ce que** les surfaces de roulement des roues présentent un angle entre elles qui correspond à l'angle d'ouverture de cône des parties d'embrayage, sachant notamment que les angles d'ouverture de cône des deux parties d'embrayage sont identiques,
et/ou **en ce que** les surfaces de roulement sont réalisées concaves de telle sorte qu'on obtient une autostabilisation du chariot.
